# EUROPEAN PATENT APPLICATION

(11) **EP 3 078 304 A1**
(43) Date of publication of application: **12.10.2016**
(21) Application number: 14867176.1
(22) Date of filing: 20.11.2014
(51) Int. Cl.: A47J 27/04, A47J 27/06

(54) **STEAM COOKER**

(30) Priority: 03.12.2013 KR 20130149096; 19.11.2014 KR 20140161588
(71) Applicant: Jeong, Gyu-tae, Incheon 407-814 (KR)
(72) Inventor: Jeong, Gyu-tae, Incheon 407-814 (KR)
(74) Representative: Dr. Weitzel & Partner
(86) International application number: PCT/KR2014/011156
(87) International publication number: WO 2015/083961

(57) **Abstract**

The present invention relates to a steam cooker and, more particularly, to a steam cooker configured such that food is supplied with steam both from above and from below, thereby evenly cooking the entire food, and condensed water, which is generated when moisture contained inside the steam is condensed, is easily discharged to the outside, thereby preventing degradation of taste of the food resulting from contact between the food and the condensed water. In order to accomplish the above-mentioned purpose, a steam cooker according to the present invention comprises: a steam supply device for generating and supplying steam; and a cooking container for receiving steam from the steam supply device and cooking food contained therein, wherein the cooking container comprises a first containing unit for containing food therein, a second containing unit which is formed to communicate with the lower portion of the first containing unit and receives steam from the steam supply device, and a cap which is provided on the upper portion of the first containing unit and receives steam from the steam supply device.

## Description

### [Technical Field]

The invention relates to a steam cooker. More particularly, exemplary embodiments of the present invention relate to a steam cooker configured such that food is supplied with steam both from above and from below, thereby evenly cooking the entire food, and condensed water, which is generated when the steam is condensed, is easily discharged to the outside, thereby preventing degradation of taste of the food by contact between the food and the condensed water.

### [Background Art]

Example of traditional heating cooker that is used to cook food is microwave using a high frequency, and a gas stove or an electric stove which directly heats the food using a heater.

Kind of food which can be cooked by the microwave is limited, and there is a problem that heated food by the microwave is dried so that flavor of the heated food is not delicious. Cooking the food by the gas stove or electric stove has a disadvantage of long cooking time and low efficiency because air which has relatively low density works as a heat transfer medium between the heater and the food.

Therefore, a steam cooker which uses steam to heat food has been developed to overcome the disadvantages of the traditional heating cooker mentioned above. The steam cooker may maintain proper moist in the food for good taste, and the steam in a cooking container may be an efficient heat transfer medium, so that cooking time may be reduced.

An example of prior art about the steam cooker is described in FIGS. 1 and 2. (refers to KR 10-1311863) The steam cooker includes a steam supply device 20 which includes a steam generating room 21 in a body 10, an electrical heater 22 for generating steam, and an electrical heater 24 for drying food, a grill 30, a steam container part 40 having a steam container 41 on the grill 30, and a controller 50 to control the electrical heater 22 and the electrical heater 24. The electrical heater 22 is disposed under the steam generating room 21. The electrical heater 24 is disposed on a heat transfer rim 23 which is disposed at outer side of an opening 21a of the steam generating room 21. The grill 30 is provided on the heat transfer rim 23 to cover the opening 21a and has a ridge portion 31, far infrared emitters 32 which is built in the ridge portion 31. A steam emitting hole 33 is formed through the grill 30.

According to the prior art described in KR 10-1311863, it has advantages in cooking various food by steam to reduce cooking time, but the steam is provided only from below of the food. Thus, the food is not uniformly cooked, and it is hard to drain condensed water formed by the steam, so that there is a degradation of taste of the food caused by contact between the food and the condensed water.

### [Disclosure of the Invention]

### [Problem to be solved]

The present invention is made by keeping in mind the above problems occurring in the related art, and an object of the present invention is to provide a steam cooker cooking a food therein by using a steam from a steam supply device which generates and provides the steam. The steam cooker includes a cooking container having a first containing unit configured to receive the food, a second containing unit connected to a lower portion of the first containing unit, and a cap which is provide on an upper portion of the first containing unit to seal the first containing unit, so that the steam may be provided from above and from below to uniformly cook the food as a whole.

In addition, the present invention also provides a steam cooker including a first containing unit configured to receive the food therein, and a second containing unit under the first containing unit to receive the steam. A steam trap is formed at a lower portion of the second containing unit to discharge condensed water which is formed by condensation of water droplet in the steam. A condensed water collector to collect the condensed water is formed at a lower portion of the cooking container, so that condensed water in the cooking container may be easily discharged by the condensed water collector. Thus, degradation of taste of the food caused by contact between the food and the condensed water may be prevented.

In addition, the present invention also provides a steam cooker including a nozzle to connect the steam supply device which provides the steam to the cooking container. The nozzle is formed with a soft material such as silicon to improve sealing performance. A sliding part is provided along a connecting tube which is connected to the nozzle. A protecting tube covering the outer side of the nozzle is formed at a side of the sliding part, so that the protecting tube covers the outer side of the nozzle when the nozzle is combined to the food container. Accordingly, inflow of external debris into the food container may be prevented.

### [Technical Solution]

To solve these problems, a steam cooker according to the present invention includes:
a steam supply device to generate and provide a steam, and a cooking container which receives the steam to cook a food therein.

Here, the cooking container may include a first containing unit configured to receive the food, and a cap which is provide on an upper portion of the first containing unit to seal the first containing unit. A providing hole to receive the steam may be formed on the first containing unit or the cap.

In addition, the cooking container may include a first containing unit configured to receive the food, a second containing unit connected to a lower portion of the first containing unit, and a cap which is provide on an upper portion of the first containing unit to seal the first containing unit. A providing hole may be formed on the second containing unit to receive the steam from the steam supply device. A providing hole to receive the steam may be formed on the first containing unit or the cap.

In addition, the first containing unit may have a wrinkle portion configured to be folded.

Here, a nozzle which is connected to the steam supply device may be connected to the providing hole.

Here, a sliding part may be provided to a connecting tube which is connected to the nozzle, and a protecting tube to cover outer side of the nozzle may be formed at a side of the sliding part.

In addition, the first and second containing units may be divided by a separating plate which has a plurality of through holes. A locking jaw may be formed on an inner surface of the first containing unit, and an inner plate having a plurality of though holes may be seated on the locking jaw.

In addition, the steam cooker may further include a holder to hold the cooking container. The holder may include a pedestal on which the cooking container is disposed, a supporting part formed at a side of the pedestal and a compression band to hold the cooking container.

In addition, the steam cooker may further include a holder to hold the cooking container. The holder may include a pedestal on which the cooking container is disposed, a supporting part formed at a side of the pedestal and a compression bar which is elastically supported toward the supporting part by an elastic element.

Here, the cooking container may be formed with a soft material such as rubber or silicon. The cooking container may include a first containing unit in which a food is received, a second containing unit disposed under the first containing unit which receives the steam from the steam supply device, and a sealing element to seal the top of the first containing unit which is opened.

Here, a pressure control unit may be formed in the first containing unit which discharges the steam when the pressure in the cooking container is higher than predetermined value. A steam trap or a stopper may be provided at a lower portion of the second containing unit to drain condensed water from the steam.

In addition, the steam cooker may further include a holder to hold the cooking container. The holder may include a pedestal on which the cooking container is disposed, a supporting part formed at a side of the pedestal, a hook which is formed at an upper portion of the supporting part and combined with an upper portion of the cooking container, and an adjusting part provided at the supporting part in which boundary of the first containing unit and the second containing unit are inserted to adjust size of the boundary.

In addition, the steam cooker may further include a moving tube which penetrates the inner plate and the separating plate.

### [Effect of the Invention]

According to the exemplary embodiments of the present inventive concept, a steam cooker may cook food therein using steam from a steam supply apparatus. The steam cooker includes a cooking container having a first containing unit configured to receive the food, a second containing unit under the first containing unit configured to receive the steam, and a cap which is provide on an upper portion of the first containing unit configured to receive the steam, so that the steam may be provided from above and from below to uniformly cook the food as a whole.

In addition, the steam cooker includes the second containing unit which is formed under the first containing unit configured to receive the steam. A steam trap is formed at a lower portion of the second containing unit to discharge condensed water which is formed by condensation of water droplet in the steam. A condensed water collector to collect the condensed water is formed at a lower portion of the cooking container, so that condensed water in the cooking container may be easily discharged by the condensed water collector. Thus, degradation of taste of the food caused by contact between the food and the condensed water may be prevented.

In addition, a nozzle for connecting the steam supply device to the cooking container is formed with a soft material such as silicon to improve sealing performance. A sliding part is provided along a connecting tube which is connected to the nozzle. A protecting tube covering the outer side of the nozzle is formed at a side of the sliding part, so that the protecting tube covers the outer side of the nozzle when the nozzle is combined to the food container. Accordingly, inflow of external debris into the food container may be prevented.

### [Brief Description of Drawings]

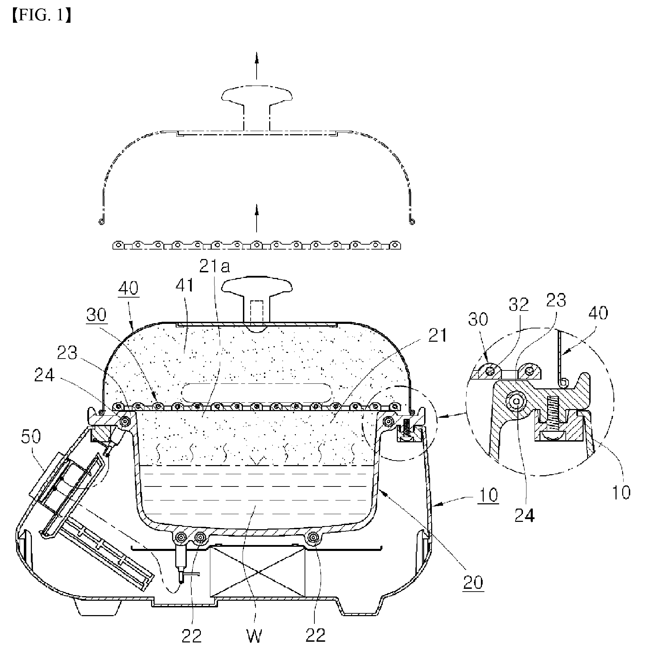

FIG. 1 is a conceptual diagram illustrating a steam cooker according to the prior art.

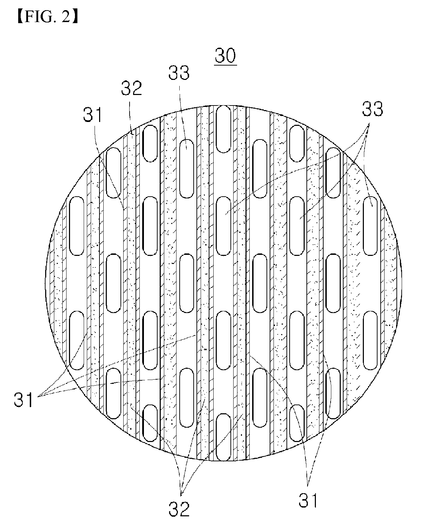

FIG. 2 is a grill of the steam cooker of the prior art.
FIG. 3 is a conceptual diagram illustrating a steam cooker according to the present invention..
FIG. 4 is a figure illustrating a steam cooker with a holder according to the present invention..
FIG. 5 is a figure illustrating a steam cooker with a holder according to another example embodiment of the present invention..
FIG. 6 is a conceptual diagram illustrating a nozzle used for a steam cooker according to the present invention.
FIG. 7 is a conceptual diagram illustrating a steam cooker according to still another example embodiment of the present invention.
FIG. 8 is a conceptual diagram illustrating a steam cooker according to still another example embodiment of the present invention.
FIG. 9 is a figure illustrating the steam cooker of FIG. 8 with a holder.
FIG. 10 is a conceptual diagram illustrating a steam cooker according to still another example embodiment of the present invention.
FIG. 11 is a conceptual diagram illustrating a steam cooker according to still another example embodiment of the present invention.

### [Best embodiment of the Invention]

Hereinafter, the invention will be explained in detail with reference to the accompanying drawings. The same reference numerals will be used to refer to the same or like parts and any further repetitive explanation concerning the above elements will be omitted. The present invention may, however, be embodied in many different forms and should not be construed as limited to the example embodiments set forth herein and shown in accompanying drawings.

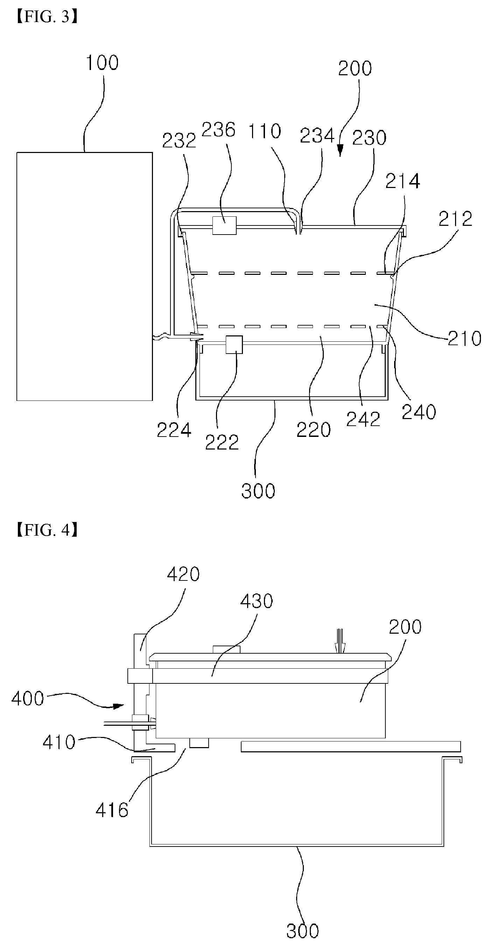

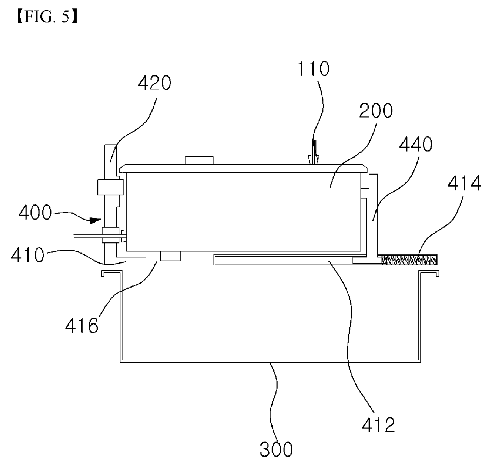

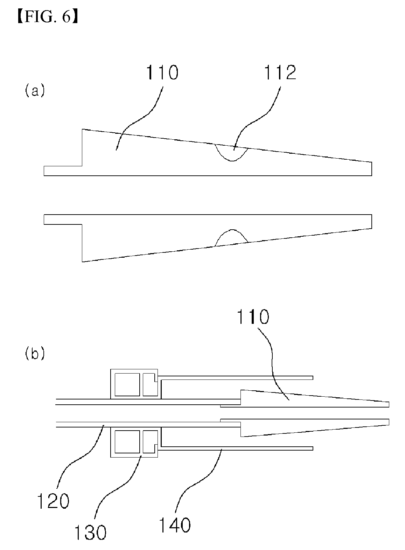

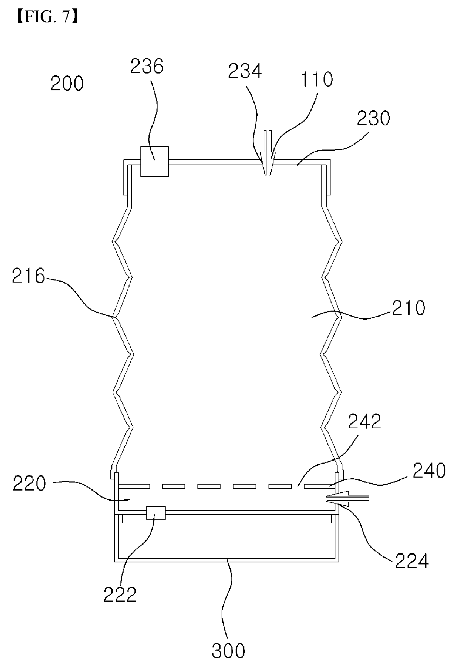

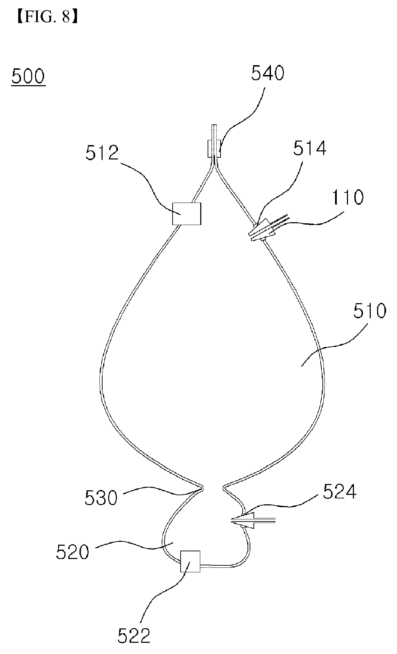

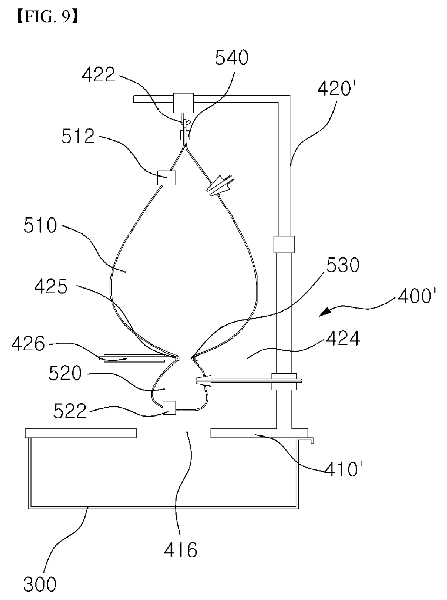

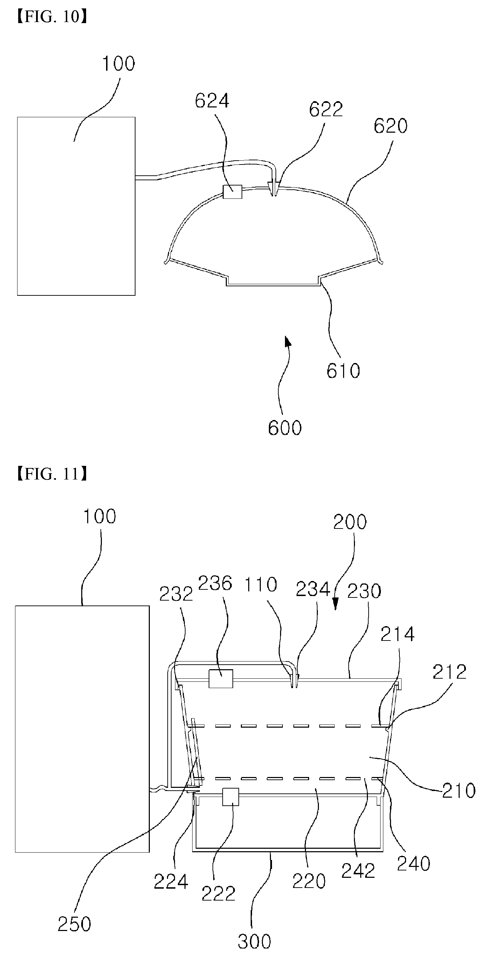

FIG. 3 is a conceptual diagram illustrating a steam cooker according to the present invention, FIG. 4 is a figure illustrating a steam cooker with a holder according to the present invention, FIG. 5 is a figure illustrating a steam cooker with a holder according to another example embodiment of the present invention, FIG. 6 is a conceptual diagram illustrating a nozzle used for a steam cooker according to the present invention, FIG. 7 is a conceptual diagram illustrating a steam cooker according to still another example embodiment of the present invention, FIG. 8 is a conceptual diagram illustrating a steam cooker according to still another example embodiment of the present invention, FIG. 9 is a figure illustrating the steam cooker of FIG. 8 with a holder, FIG. 10 is a conceptual diagram illustrating a steam cooker according to still another example embodiment of the present invention, and FIG. 11 is a conceptual diagram illustrating a steam cooker according to still another example embodiment of the present invention.

The present invention is related to a steam cooker, the steam cooker includes a steam supply device 100 which generates and provides steam by heating water received therein, and a cooking container 200 which cooks food received therein using the steam from the steam supply device 100 as described in FIG. 3.

Here, the cooking container 200 includes a first containing unit 210 in which food may be received, a second containing unit 220 formed under the first containing unit 210 and a cap 230 provided on an upper portion of the first containing unit 210. The first containing unit 210 is connected to the second containing unit 210. The cap 230 and the second containing unit 220 may receive the steam from the steam supply device 100 to supply the steam to the first containing unit 210 is, so that the food received in the first containing unit 210 may be cooked.

Thus, the steam may be provided to the food in the first containing unit 210 both from above and from below, so that the steam with constant temperature may be evenly provided to the food as a whole to evenly cook the food.

In addition, although not shown in figures, the steam may be directly provided to the first containing unit 210 without through the cap 230.

In addition, a traditional steam cooker may need an additional structure to provide steam thereunder, so that there are many problems that connect and disconnect of the structure is complicated and takes a lot of time, food should be removed from the traditional steam cooker to delivery because moving of the traditional steam cooker is not easy. However, the cooking container 200 of the present invention has a small size, and may be easily separated from the steam supply device 100, so that the food in the cooking container 200 may be delivered with the cooking container 200 itself without placing the food to another container.

In addition, the cooking container 200 includes the first containing unit 210 in which the food is received, and the second containing unit 220 which receives the steam. A separating plate 240 is disposed between the first containing unit 210 and the second containing unit 220 to separate each of spaces. A plurality of through holes 242 are formed through the separating plate 240, so that the steam provided to the second containing unit 220 may pass through the through holes 242, and may be provided to the first containing unit 210.

In addition, a locking jaw 212 is formed on an inner surface of the first containing unit 210. A inner plate 214 is supported by a locking jaw 212, to divide the first containing unit 210 into two floors, so that many foods may be received and cooked at the same time.

Here, as described in FIG. 3, only one locking jaw 212 may be formed, or a plurality of locking jaw may be formed in a vertical direction. Thus, the first containing unit 210 may be divided into many floors, so that more foods may be received and cooked at the same time.

In addition, the food on the separating plate 240 and the inner plate 214 may be melted and stop the through hole 242 of the separating plate 240 and the inner plate 214 while cooking process, so that flow of the steam may be not smooth. Thus, an additional moving tube 250 which penetrates the separating plate 240 and the inner plate 214 in a vertical direction may be provided to improve flow of the steam as described in FIG. 11.

In addition, a cap 230 may be provided to cover an opening formed on an upper portion of the first containing unit 210. A pressure control unit 236 is formed on the cap 230, so that pressure in the cooking container 200 may be controlled.

Thus, the cooking container 200 may receive the steam through the cap 230 and the second containing unit 220. When the steam provided from above and from below of the cooking container 200 is filled enough therein, pressure inside may rise and it may be dangerous, so that the pressure control unit 236 may control the pressure inside by discharge the steam when the pressure inside is higher than predetermined value.

Here, the pressure control unit 236 may be a structure such that the steam is discharged through a discharging part of which an incision is formed when the pressure inside is over elasticity of the discharging part as described in KR 10-1439993. The incision may be bent to form a gap, so that the steam inside may be discharged to outside through the gap. Variety of techniques which are well known may be applied to control the pressure.

In addition, a steam trap 222 may be formed at a lower portion of the second containing unit 220 in which the steam is provided from the steam supply device 100. The steam trap 222 may discharge condensed water formed at a surface of the cooking container 200 by contact between droplets in the steam and surface of the cooking container 200 and etc.

Therefore, degradation of taste of the food caused by contact between the food and the condensed water may be prevented while cooking the food using steam.

In addition, the steam trap 222 may be a disc-type steam trap, a bimetal-type steam trap, a bucket-type steam trap and etc. Since such a configuration is already known so that detailed description will be omitted.

Here, a condensed water collector 300 which has an opened top may be formed at a lower portion of the cooking container 200. The condensed water collector 300 may collect the condensed water discharged through the steam trap 222, so that overflow of the condensed water may be prevented.

In addition, although not shown in the figure, the condensed water collector 300 may have a drawer, so that the condensed water which is collected may be easily discharged.

In addition, a through hole (not shown) may be formed instead of the team trap 222, and a stopper may be provided on the through hole. The stopper may seal the through hole during cooking, and the condensed water may be discharged by removing the stopper.

A providing hole 234, 224 configured to receive the steam from the steam supply device 100 may be formed through the cap 230 and the second containing unit 220, respectively. A nozzle 110 which is connected to the steam supply device 100 through a hose or connecting tube 120 may be connected the providing hole 234, 224.

Here, the nozzle 110 may be inclined, and formed with a soft material such as silicon. When the nozzle 110 is inserted in the providing hole 234, 224, a groove 112 may be temporarily formed on an outer side of the nozzle 110 by the providing hole 234, 224 as described in FIG. 6(a), so that the nozzle 110 and the providing hole 234, 224 may be sealed each other.

In addition, when the pressure inside increases by continuously providing the steam into the cooking container 200, a force to discharge the steam to outside of the cooking container 200 may be formed. The groove 112 formed on the nozzle 110 which is formed with the soft material such as silicon may also be forced toward the outside, so that the providing hole 234, 224 maybe completely sealed by the nozzle 110. Thus, leakage of the steam may be prevented.

In addition, as mentioned above, a providing hole (not shown) may be directly formed through the first containing unit 210 instead of the providing hole 234 of the cap 230, so that the steam may be provided form the steam supply device 100 directly.

In addition, as described in FIG. 6 (b), the connecting tube 120 which is connected to an end portion of the nozzle 110 has a sliding part 130. The sliding part 130 may be configured to move along the connecting tube 120. A protecting tube 140 covering the outer side of the nozzle 110 may be formed at a side of the sliding part 130.

Thus, when the nozzle 110 is combined to the providing hole 234, 224, the sliding part 130 is moved, so that an end portion of the protecting tube 140 makes contact with the outer side of the providing hole 234, 224. Accordingly, inflow of external debris into the nozzle 110 may be prevented.

In addition, according to another example embodiment of FIG. 4, a cooking container 200 may be placed on an additional holder 400. The holder 400 may include a planar pedestal 410, a supporting part 420 formed at a side of the pedestal 410 and a compression band 430 to hold the cooking container 200.

Here, the compression band 430 may be formed with a material having high elasticity such as rubber, so that the cooking container 200 may be placed in compression band 430 to fix the cooking container 200 on the supporting part 420.

The cooking container 200 is fixed by the holder 400, so that shake of the cooking container 200 caused by providing the steam may be reduced. Thus, the food in the cooking container 200 may be stably placed in the cooking container 200 during cooking.

In addition, a drain hole 416 may be formed through the planar pedestal 410. The steam trap 222 of the cooking container 200 may be placed corresponding to the drain hole 416, so that condensed water discharged through the steam trap 222 may be collected through the drain hole 416.

Here, a condensed water collector 300 may be formed under the planar pedestal 410, so that the condensed water flowing through the 416 may be collected by the condensed water collector 300.

In addition, a fixing part (not numbered) to fix the nozzle 110 or the connecting tube 120 may be formed on the supporting part 420, so that the nozzle 110 may be firmly combined to the cooking container 200.

In addition, according to another example embodiment of FIG. 5, a holder 400 to hold the cooking container 200 according to another example embodiment may include a planar pedestal 410, a supporting part 420 formed at a side of the pedestal 410 and a compression bar 440 which is elastically supported toward the supporting part 420.

Here, the compression bar 440 may be installed on a guide groove 412 formed at an upper portion of the pedestal 410, and may be moved along the guide groove 412. The compression bar 440 may be pressed toward the supporting part 420 by an elastic element 414 at an end portion of the compression bar 440.

Thus, the cooking container 200 located between the supporting part 420 and the compression bar 440 may be pressed by the compression bar 440 due to elasticity of the elastic element 414, so that the cooking container 200 may be firmly fixed. Thus, shake of the cooking container 200 caused by providing the steam may be reduced.

In addition, to adjust location of the compression bar 440, the elastic element 414 may be used as mentioned above, screw or a protrusion of the compression bar 440 and a plurality of holes on the pedestal 410 may be also used to adjust the location, and many prior art to adjust the location of the compression bar 440 may be used.

In addition, a drain hole 416 may be formed at the pedestal 410 as described in FIG. 4, and a condensed water collector 300 may be disposed under the pedestal 410, so that condensed water from the cooking container 200 may be collected.

In addition, according to another example embodiment of FIG. 7, a cooking container 200 to cook food therein using steam from the steam supply device 100 includes a first containing unit 210 in which the food is received, the second containing unit 220 disposed under the first containing unit 210, and a cap 230 provided on the first containing unit 210. The first containing unit 210 and the second containing unit 220 may be connected each other. The cap 230 and the second containing unit 220 provide the steam from the steam supply device 100 to the first containing unit 210, so that the food in the first containing unit 210 may be cooked.

Here, the first containing unit 210 has a wrinkle portion 216 formed along length direction configured to be folded. The first containing unit 210 may be folded in a small size when the steam cooker is not in use. Thus, storage and transport may be easy.

In addition, the first containing unit 210 may be removable from the second containing unit 220. An additional packing (not shown) may be provided on an inner circumferential surface under the first containing unit 210, so that sealing performance between the first containing unit 210 and the second containing unit 220 may be improved. Thus, leakage of the steam may be prevented.

Other elements of the steam cooker are substantially same as the elements mentioned above. Thus, any further repetitive explanation concerning the above elements will be omitted.

In addition, according to another example embodiment of FIG. 8, a food container 500 to cook food therein using steam from the steam supply device 100 may have a tube shape and be formed with a soft material such as rubber or silicon. A first containing unit 510 is formed at an upper portion of the food container 500, and a second containing unit 520 disposed under the first containing unit 510 and connected to the first containing unit 510.

Here, a boundary portion 530 is formed between the first containing unit 510 and the second containing unit 520. A though hole 530 is formed as the boundary portion 530, and has a diameter smaller than those of the first and second containing units 510 and 520. The first containing unit 510 and the second containing unit 520 are connected each other through the through hole 530. Providing holes 514, 524 are respectively formed at the first containing unit 510 and the second containing unit 520 to receive the steam from the steam supply device 100. Said nozzle 110 may be combined to the providing hole 514 or 524.

In addition, the containing unit 510 may have an opened top. A sealing element 540 such as tongs or band to seal a top portion of the containing unit 510 formed with the soft material may be provided, so that leakage of the steam may be prevented.

In addition, a pressure control unit 512 may be formed at the containing unit 510, so that the steam may be discharged when inside pressure is higher than predetermined value. Thus, accident due to excessive pressure may be prevented.

In addition, a steam trap 522 is formed at a lower portion of the second containing unit 520 to discharge condensed water from the steam.

In addition, according to another example embodiment of FIG. 9, the cooking container 500 which is formed with a soft material may be supported by an additional holder 400' during cooking. The holder 400' may include a pedestal 410' on which the cooking container is disposed, a supporting part 420' which is formed at a side of the pedestal 410', a hook 422 which is formed at an upper portion of the supporting part 420' and combined with an upper portion of the cooking container 500.

Here, an adjusting part 424 may be provided at the supporting part 420'. A though hole 425 is formed at a central portion of the adjusting part 424. An adjusting element 426 is formed outer side of the adjusting part 424 to adjust size of the through hole with respect to the through hole 425.

Accordingly, a boundary 530 is located in the through hole 425 of the adjusting part 424. Size of the boundary 530 may be adjusted by moving the adjusting element 426, so that amount of the steam through the second food container 520 may be controlled to cook food.

In addition, according to another example embodiment of FIG. 10, a cooking container 600 which cooks food therein using steam from the steam supply device 100 includes a first container unit 610 and a cap 620 which covers an upper portion of the first container unit 610.

Here, a providing hole 622 to receive the steam from the steam supply device 100 is formed on the cap 620, so that the food in the cooking container 600 may be cooked by the steam.

In addition, a pressure control unit 624 may be provided on the cap 620, so that the steam may be discharged through the pressure control unit 624 when the pressure inside is higher than predetermined value. Thus, excessive pressure may be prevented.

In addition, A providing hole (not shown) may be formed directly at the first containing unit 610 instead of at the cap 620. The steam from steam supply device 100 may be provided through the providing hole.

The foregoing is illustrative of the invention and is not to be construed as limiting thereof. Although a few exemplary embodiments of the invention have been described, those skilled in the art will readily appreciate that many modifications are possible in the exemplary embodiments without materially departing from the novel teachings and advantages of the invention. Accordingly, all such modifications are intended to be included within the scope of the invention as defined in the claims. Therefore, it is to be understood that the foregoing is illustrative of the invention and is not to be construed as limited to the specific exemplary embodiments disclosed, and that modifications to the disclosed exemplary embodiments, as well as other exemplary embodiments, are intended to be included within the scope of the appended claims.

### Industrial Applicability

The invention relates to a steam cooker. More particularly, exemplary embodiments of the present invention relate to a steam cooker configured such that food is supplied with steam both from above and from below, thereby evenly cooking the entire food, and condensed water, which is generated when the steam is condensed, is easily discharged to the outside, thereby preventing degradation of taste of the food caused by contact between the food and the condensed water.

## Claims

1. A steam cooker comprising:
a steam supply device to generate and provide a steam; and
a cooking container which receives the steam to cook a food therein.

2. The steam cooker of claim 1, wherein the cooking container comprises:
a first containing unit configured to receive the food; and
a cap which is provided on an upper portion of the first containing unit to seal the first containing unit, and
a providing hole to receive the steam which is formed on the first containing unit or the cap.

3. The steam cooker of claim 1, wherein the cooking container comprises:
a first containing unit configured to receive the food;
a second containing unit connected to a lower portion of the first containing unit, wherein a providing hole is formed at the second containing unit to receive the steam from the steam supply device; and
a cap which is provided on an upper portion of the first containing unit to seal the first containing unit, and
a providing hole to receive the steam which is formed on the first containing unit or the cap.

4. The steam cooker of claim 3, wherein the first containing unit has a wrinkle portion configured to be folded.

5. The steam cooker of claim 2 or 3, wherein a nozzle which is connected to the steam supply device is connected to the providing hole.

6. The steam cooker of claim 5, wherein a sliding part is provided to a connecting tube which is connected to the nozzle, and
a protecting tube to cover outer side of the nozzle is formed at a side of the sliding part.

7. The steam cooker of claim 3, wherein the first and second containing units are divided by a separating plate which has a plurality of through holes,
a locking jaw is formed on an inner surface of the first containing unit, and an inner plate having a plurality of though holes is seated on the locking jaw.

8. The steam cooker of claim 3, further comprising a holder on which the cooking container is disposed,
wherein the holder comprises a pedestal on which the cooking container is disposed, a supporting part formed at a side of the pedestal, and a compression band installed at the supporting part to fix the cooking container therein.

9. The steam cooker of claim 3, further comprising a holder on which the cooking container is disposed,
wherein the holder comprises a pedestal on which the cooking container is disposed, a supporting part formed at a side of the pedestal, and a compression bar which is disposed on the pedestal and elastically supported toward the supporting part.

10. The steam cooker of claim 1, wherein the cooking container is formed with a soft material,
and comprises:
a first containing unit configured to receive the food therein and to receive the steam from the steam supply device;
a second containing unit disposed at a lower portion of the first containing unit to receive the steam from the steam supply device; and
a sealing element to seal an opened top of the first containing unit.

11. The steam cooker of claim 10, wherein a pressure control unit is provided in the first container unit, the pressure control unit is configured to discharge the steam when pressure in the cooking container is higher than predetermined value, and
a steam trap or a through hole with a stopper is provided at a lower portion of the second containing unit to drain condensed water from the steam.

12. The steam cooker of claim 11, further comprising a holder on which the food container is disposed, and
wherein the holder comprises:
a pedestal on which the cooking container is disposed;
a supporting part formed at a side of the pedestal;
a hook which is formed at an upper portion of the supporting part and combined with an upper portion of the cooking container; and
an adjusting part provided at the supporting part in which boundary of the first containing unit and the second containing unit are inserted to adjust size of the boundary.

13. The steam cooker of claim 7, further comprising a moving tube which penetrates the inner plate and the separating plate.
